# EUROPÄISCHE PATENTSCHRIFT

(11) **EP 2 329 221 B1**
(45) Veröffentlichungstag und Bekanntmachung des Hinweises auf die Patenterteilung: **14.10.2015**
(21) Anmeldenummer: 09782345.4
(22) Anmeldetag: 28.08.2009
(51) Int. Cl.: G01B 11/275

(54) **TARGETANORDNUNG, SATZ VON TARGET-ANORDNUNGEN UND VORRICHTUNG ZUR OPTISCHEN ACHSVERMESSUNG**
TARGET ARRANGEMENT, UNIT OF TARGET ARRANGEMENTS AND DEVICE FOR OPTICALLY ALIGNING AN AXLE
SYSTÈME CIBLE, ENSEMBLE DE SYSTÈMES CIBLES ET DISPOSITIF DE RÉGLAGE OPTIQUE DE LA GÉOMÉTRIE

(30) Priorität: 12.09.2008 DE 102008042019
(43) Veröffentlichungstag der Anmeldung: 08.06.2011
(73) Patentinhaber: Robert Bosch GmbH, 70442 Stuttgart (DE)
(72) Erfinder: NOBIS, Guenter, 72622 Nuertingen (DE); UFFENKAMP, Volker, 71642 Ludwigsburg (DE)
(86) Internationale Anmeldenummer: PCT/EP2009/061147
(87) Internationale Veröffentlichungsnummer: WO 2010/028965

(56) Entgegenhaltungen:
- US-A- 6 134 792
- US-A1- 2004 139 620
- US-A1- 2007 068 016
- US-A1- 2008 209 744
- US-B1- 6 323 776

## Beschreibung

Die Erfindung betrifft ein Verfahren zur optischen Achsvermessung von Rädern eines Kraftfahrzeugs.

Im Stand der Technik sind Vorrichtungen und Verfahren zur optischen Fahrwerksvermessung bekannt, bei denen Passpunktfelder von Targets durch monoskopische Bildaufnahmeeinrichtungen aufgenommen werden. Die Position dieser Passpunkte in einem lokalen dreidimensionalen Targetkoordinatensystem ist der Auswerteeinheit des Messsystems bekannt, und die Auswerteeinheit kann die relevanten Fahrwerksparameter des Kraftfahrzeugs daraus bestimmen.

Solche Targets mit darauf angeordneten Passpunktfeldern weisen eine hohe Komplexität auf, sie stellen eine hohe Anforderung an die Fertigung dieser Targets und sind demgemäß relativ teuer.

Es ist daher eine Aufgabe der vorliegenden Erfindung, eine Targetanordnung zur Fahrwerksvermessung anzugeben, die eine geringere Komplexität erfordert und daher kostengünstig herstellbar ist und die sich gleichermaßen für eine Fahrwerksvermessung eignet. Weiterhin soll eine kostengünstige Vorrichtung zur optischen Achsvermessung von Rädern eines Kraftfahrzeugs angegeben werden, die einfach bedienbar ist und sehr genaue Messwerte liefert.

Diese Aufgabe wird durch den Gegenstand des unabhängigen Anspruch 1 gelöst.

Vorteilhafte Weiterbildungen ergeben sich aus den abhängigen Ansprüchen. Die im Anspruch 1 beschriebene Targetanordnungen eignen sich sehr gut für eine zuverlässige Fahrwerksvermessung. Sie weisen eine geringere Komplexität auf und sind daher einfacher und kostengünstiger zu fertigen.

Bei der Targetanordnung gemäß dem unabhängigen Anspruch 1 genügt es, wenn eine erste signifikante Marke, deren Abstand zu einer Bezugsebene bekannt ist, und eine zweite signifikante Marke deren Abstand zu der ersten signifikanten oder zu einer Bezugsebene bekannt ist, vorhanden sind. Die wenigstens eine weitere Marke kann unbestimmt sein.

Die optischen Merkmale auf dem Target bilden kein Passpunktsystem, d. h., ihre Position in einem lokalen Koordinatensystem ist nicht bekannt.

Um erfindungsgemäß eine Achsvermessung durchführen zu können, genügt es, wenn auf dem Target drei Marken vorhanden sind. Die beiden signifikanten Marken gemäß Anspruch 1 werden dabei für den Einmessvorgang herangezogen.

Bei dem Einmessvorgang wird eine Bildfolge der signifikanten Marken und der mindestens einen weiteren unbestimmten Marke der Targetanordung aufgenommen. Diese Marken bilden beim Abrollen der Räder jeweils eine Kreisbahn ab. Durch eine Auswerteeinheit werden ein lokales 3D-Koordinatensystem, die Raumlage der Raddrehachse im lokalen 3D-Koordinatensystem zur Kompensation des Felgenschlages und die Lage der Radmittelebene im lokalen 3D-Koordinatensystem bestimmt. Daraus lässt sich die Fahrzeuglängsmittelebene bestimmen. Die Daten werden für den nachfolgenden Messvorgang in der Auswerteinheit hinterlegt.

Die Position der Bildaufnahmeeinrichtung oder der Bildaufnahmeeinrichtungen in einem gemeinsamen Messplatzsystem ist der Auswerteeinheit dabei bekannt, ggf. durch Heranziehung von Quer-Referenzkameras.

Nach dem Einmessvorgang und vor dem eigentlichen Messvorgang werden die Aufstandsplatten entriegelt, wodurch sich die Räder in der Aufstandsfläche entspannen.

Beim sich an den Einmessvorgang anschließenden eigentlichen Messvorgang wird dann zum Bestimmen von Spur und Sturz von der jeweiligen Bildaufnahmeeinrichtung, die als Stereokameraanordnung aber auch als Monokameraanordnung ausgebildet sein kann, eine einzige Aufnahme von mindestens drei Marken des jeweiligen Targets getätigt. Da das lokale 3D-Koordinatensystem der Marken der Targets mit dem Einmessvorgang bestimmt worden ist, gibt die Lage der aufgenommenen mindestens drei Marken die Raumlage der jeweiligen Radachse im bekannten 3D-Koordinatensystem an, und daraus lassen sich die Winkel von Spur und Sturz des jeweiligen Rads ermitteln.

Gemäß einer weiteren Ausführungsform der Erfindung müssen nach dem Einmessvorgang die signifikanten Marken nicht mehr betrachtet werden, es reicht vollkommen aus, wenn bei der eigentlichen Messung durch die Messköpfe drei unbestimmte Marken aufgenommen werden, die gemeinsam mit der signifikanten Marke im Einmessvorgang im lokalen 3D-Koordinatensystem mitbestimmt wurden.

Dadurch dass eine zweite signifikante Marke vorgesehen ist, deren Abstand zu der ersten signifikanten Marke bekannt ist, können Temperatureinflüsse bei den Messkameras, die den Abstand der Basis, die oft aus Aluminium gefertigt ist, zwischen den zwei stereoskopischen Kameras verändern können, kompensiert werden. Dadurch kann eine hohe Genauigkeit der erhaltenen Messwerte gewährleistet werden. Das Maßstabsproblem, das sich durch auf die Messeinheiten wirkende Temperatureinflüsse, bspw. auf die Messeinheiten auftreffende Sonnenstrahlen, ergibt, wird demgemäß gelöst.

Eine zweite signifikante Marke bietet daher den Vorteil, dass Maßstabsfehler des Messsystems vermieden werden und die Längsmittelebene des Kraftfahrzeugs als Bezug für die Einzelspur der Hinterräder präzise bestimmt werden kann. Eine Messung der Maßstabsinformationen vor jeder Fahrwerksvermessung kann entfallen, es ergibt sich eine kontinuierliche Maßstabsüberwachung und Maßstabskorrektur, da die Targets während der Fahrwerksvermessung immer sichtbar sind.

Gemäß der Erfindung sind der Abstand zweiten signifikanten Marke zur ersten signifikanten Marke und der Abstand zweiten signifikanten Marke zu einer Bezugsebene bekannt. Dadurch ergibt sich eine weiter verbesserte Maßstabsüberwachung und Maßstabskorrektur.

Gemäß einer weiteren Ausführungsform der Erfindung können die unbestimmte(n) Marke(n) und die wenigstens eine signifikante Marke jeweils den gleichen Abstand zur Vorderseite des Targets aufweisen. Alternativ dazu können die unbestimmte(n) Marke(n) auf dem Target einen ersten Abstand zur Vorderseite des Targets aufweisen, und die zwei signifikanten Marken können diese eine gleichen oder einen verschiedenen Abstand zur Vorderseite des Targets aufweisen. Schließlich können auch die signifikante(n) Marke(n) und die unbestimmte(n) Marke(n) jeweils unterschiedliche Abstände zur Vorderseite des Targets aufweisen.

Gemäß einer weiteren Ausführungsform der Erfindung kann die erste signifikante Marke in der Ebene der Steckachse liegen, was konstruktive und fertigungstechnische Vereinfachungen mit sich bringt.

Die Erfindung betrifft auch einen Satz von wenigstens zwei Targetanordnungen zur optischen Fahrwerksvermessung, die jeweils zur Anbringung an einem Rad eines Kraftfahrzeugs vorgesehen sind.

In der einfachsten Ausführungsform der Erfindung kann der Satz von Targetanordnungen jeweils zwei Targetanordnungen umfassen, die an den Rädern einer Achse eines Kraftfahrzeugs angebracht werden. Die Targetanordnungen an der anderen Achse bzw. an den anderen Achsen des Kraftfahrzeugs können sich dann von dem erfindungsgemäßen Target-Anordnungssatz unterscheiden.

Ebenso kann der erfindungsgemäße Target-Anordnungssatz jeweils vier Targetanordnungen umfassen, die an den Rädern eines Kraftfahrzeugs angebracht werden. Bei drei- oder mehrachsigen Fahrzeugen, insbesondere bei LKW's, kann ein erfindungsgemäßer Target-Anordnungssatz sechs oder mehr Targetanordnungen umfassen.

Die Erfindung ist nachfolgend anhand von Ausführungsbeispielen mit Bezug auf die beiliegenden Figuren näher erläutert.
- Figur 1: zeigt eine Prinzipskizze einer Draufsicht auf einen Messplatz mit einem darauf stehenden Kraftfahrzeug;
- Figur 2: zeigt eine schematische Perspektivansicht eines Messplatzes mit einem auf Fahrschienen stehenden Kraftfahrzeug;
- Figur 3: zeigt eine Prinzipskizze eines Kraftfahrzeug-Fahrwerks mit an dessen Rädern angebrachten Targets;
- Figur 4: zeigt eine schematische Perspektivansicht einer ersten Targetanordnung zur Anbringung an einer schematisch darunter gezeigten Radfelge sowie eine schematische Seitenansicht des Targets der Targetanordnung, gemäß einem Ausführungsbeispiel der Erfindung;
- Figur 5: zeigt eine schematische Schnittansicht einer Targetanordnung gemäß einem weiteren Ausführungsbeispiel der Erfindung, wobei die Targethalterung der Targetanordnung weggelassen ist;
- Figur 6: zeigt eine schematische Schnittansicht einer Targetanordnung gemäß einem weiteren Ausführungsbeispiel der Erfindung, wobei die Targethalterung der Targetanordnung weggelassen ist;
- Figur 7: zeigt eine schematische Perspektivansicht einer Targetanordnung gemäß einem weiteren Ausführungsbeispiel der Erfindung; und
- Figur 8: zeigt eine schematische Perspektivansicht einer Targetanordnung gemäß einem weiteren Ausführungsbeispiel der Erfindung.

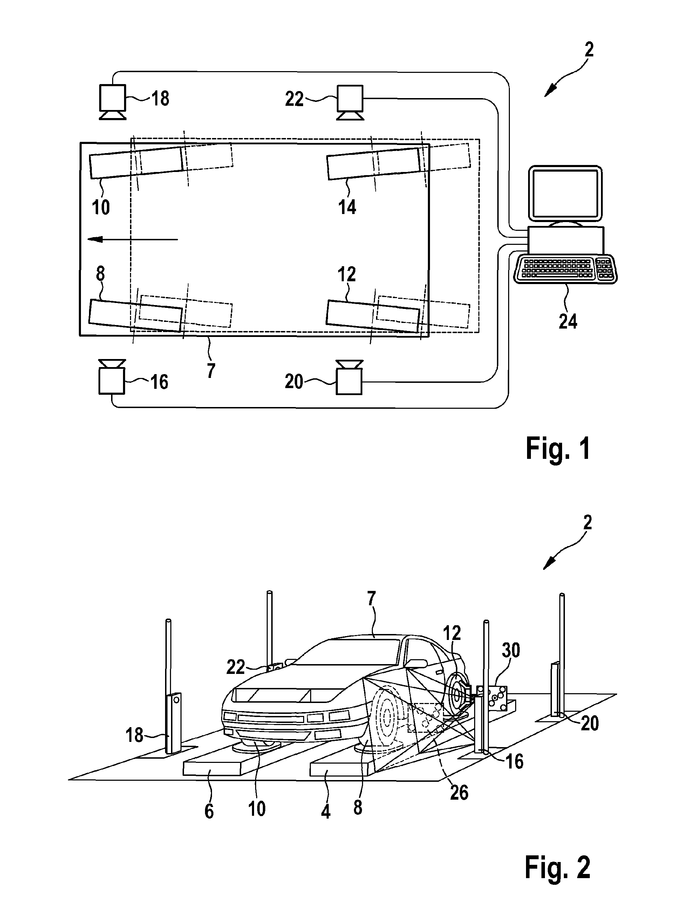

Figur 1 zeigt eine Prinzipskizze einer Draufsicht auf einen Messplatz 2 mit einem darauf stehenden Kraftfahrzeug 7.

Dabei sind die Vorderräder 8 und 10 und die Hinterräder 12 und 14 mit einem Vorspurwinkel zur Fahrzeuglängsmittelachse dargestellt, und zur besseren Darstellung ist die Karosserie des Kraftfahrzeugs 7 nur als schematischer Umriss dargestellt.

Die Raddrehachsen der Räder 8 bis 14 sind jeweils durch punktiert-gestrichelte Linien angedeutet. Neben den Rädern 8 bis 14 sind jeweils Messköpfe 16, 18, 20 und 22 angeordnet, die jeweils über eine in Figur 1 nicht dargestellte stereoskopische Messkameraanordnung verfügen, die in der Lage ist, das Kraftfahrzeugrad 8 bis 14 oder einen Ausschnitt daraus bzw. an den Rädern 8 bis 14 angebrachte Targets oder Ausschnitte daraus aufzunehmen. Des Weiteren ist eine Datenverarbeitungseinheit 24 vorgesehen, die mit den Messköpfen 16 bis 22 verbunden ist, und von diesen Messdaten zur Auswertung erhält.

Etwas nach rechts verschoben ist das Kraftfahrzeug 7 mit seinen Rädern 8 bis 14 mit gepunkteten Linien in einer vorangehenden Fahrzeugposition dargestellt.

Figur 2 zeigt eine schematische Perspektivansicht eines Messplatzes 2 mit einem auf Fahrschienen 4 und 6 stehenden Kraftfahrzeug 7.

Dabei ist zu erkennen, dass die Vorderräder 8 und 10 sowie das linke Hinterrad 12 des Kraftfahrzeugs 7 jeweils auf Drehtellern der Fahrschienen 4 und 6 stehen, und dass an den linken Rädern 8 und 12 des Kraftfahrzeugs 7 Targetanordnungen 26 und 30 befestigt sind, deren Targets im Wesentlichen nach außen weisen und mit Marken versehen sind.

Die Messköpfe 16 bis 22 sind säulenförmig ausgebildet und umfassen exemplarisch eine Stereo-Kamera-Anordnung, d.h. jeweils eine obere und eine untere Messkamera, die auf das jeweils gegenüberliegende Rad 8 bis 14 ausgerichet sind und dieses oder ein daran angebrachtes Target optisch erfassen können.

Die beiden Messkameras eines Messkopfs 16 bis 22 bilden jeweils ein Stereosystem bzw. eine stereoskopische Bildaufnahmeeinrichtung. Die Blickfelder der Messkameras des vorderen linken Messkopfs 16 sind in Figur 2 visualisiert.

Im Einmessvorgang des Messplatzes 2 liefern die Messkameras der Messköpfe 16 bis 22 eine Bildfolge von mindestens drei Bildern, die bei einer Bewegung des Fahrzeugs 7 auf den Fahrschienen 4 und 6 aufgenommen werden. Die Auswerteeinheit 24 berechnet aus den Bilddaten für jedes Rad 8 bis 14 ein lokales 3D-Koordinatensystem, die Drehachse und das Drehzentrum des Rades 8 bis 14.

Dabei werden die zweidimensionalen Bildkoordinaten der Marken auf den Targets 26-32 in den einzelnen Bildern der Bildfolge gemessen. Über die Bildsequenz hinweg erfolgt eine Zuordnung der entsprechenden Marken, es wird also ein Tracking der Marken durchgeführt. Hierzu können Codierungen an den Marken auf den Targets angebracht sein oder es können Standardverfahren aus der Bildverarbeitung eingesetzt werden.

Der Messdatenauswertung liegt folgendes mathematisches Modell zugrunde:
Die Marken M₁...Mₙ (i=1...n) des jeweiligen Targets werden während der Vorbeifahrt in einer Bildfolge (Bildnummer j=1...m) von der jeweiligen Kamera aufgenommen. Die Positionen der Marken im Kamerabild zum Zeitpunkt j der Bildfolge ist x'ᵢⱼ.

Aus den Koordinaten x'ᵢⱼ eines stereoskopischen Bildpaares können mit Standardverfahren der Bildverarbeitung die 3D-Koordinaten Xᵢ (i=1...n) der Marken in einem lokalen Radkoordinatensystem bestimmt werden. Aus der Auswertung der gesamten Bildfolge lassen sich die Bewegungsparameter (Rotation Rⱼ, Translation tⱼ) des Rades 8 bis 14 zum Bildaufnahmezeitpunkt t bestimmen sowie zusätzlich die Genauigkeit der 3D-Koordinaten der Marken verbessern.

Bei monoskopischen Bildaufnahmesystemen lassen sich anstatt der stereoskopischen Bestimmung der 3D-Koordinaten aus Einzelbildpaaren die 3D-Koordinaten der Marken unmittelbar im Rahmen der Auswertung der Bildfolge zur Bestimmung der Bewegungsparameter mitbestimmen, gemäß dem Prinzip "structure from motion", was dem Fachmann bekannt ist.

Aus den 3D-Koordinaten der Marken am Target und den Bewegungsparametern können mit geometrischen Berechnungen die Drehachse und das Drehzentrum des Rades in dem lokalen Radkoordinatensystem bestimmt werden.

Bei der anschließenden eigentlichen Fahrwerksvermessung werden die notwendigen Parameter, bspw. Spur- und Sturzwerte, bestimmt.

Die Messdatenauswertung kann getrennt für alle vier Einzelräder 8 bis 14, also radweise, gemeinsam für die gegenüberliegenden Räder 8 und 10 sowie 12 und 14, also achsweise, oder gemeinsam für alle Räder 8 bis 14, also in einer Gesamtfahrzeugauswertung, erfolgen. Bei der achsweisen Auswertung und der Gesamtfahrzeugauswertung muss jeweils eine zeitliche Synchronität der Bildaufnahmen hergestellt werden.

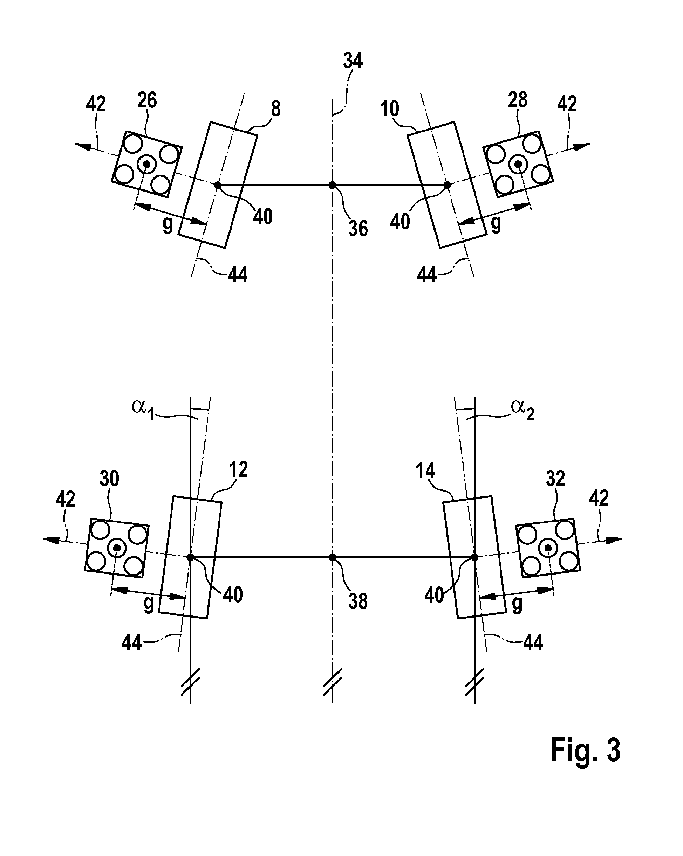

Figur 3 zeigt eine Prinzipskizze eines Kraftfahrzeug-Fahrwerks mit an den Rädern 8 bis 14 angebrachten Targets 26 bis 32.

Dabei sind die Targethalterungen, mit denen die Targets 26 bis 32 an den Rädern 8 bis 14 befestigt sind, zur Vereinfachung der Darstellung nicht gezeigt. Für jedes Rad 8 bis 14 sind jeweils die Raddrehachse 42 und die Radmittelebene 44, die als Mittelebene der Radfelge senkrecht zur Raddrehachse definiert ist, dargestellt. Des Weiteren sind die Drehzentren 40 der Räder 8 bis 14 dargestellt, die jeweils als Schnittpunkt der Raddrehachse 42 mit der Radmittelebene 44 definiert sind. Die Spurweite der Vorderachse ergibt sich aus der Verbindung der beiden Drehzentren 40 der Vorderräder 8 und 10, und die Spurweite der Hinterachse ergibt sich aus der Verbindung der beiden Drehzentren 40 der Hinterräder 12 und 14. Die Mitte der Spurweite der Vorderachse ist mit dem Bezugszeichen 36 und die Mitte der Spurweite der Hinterachse ist mit dem Bezugszeichen 38 gekennzeichnet. Ferner ist in Figur 3 die Längsmittelebene 34 zu erkennen, die sich aus der Verbindung der Mitte der Spurweite der Vorderachse 36 und der Mitte der Spurweite der Hinterachse 38 ergibt. Durch die Raddrehzentren 40 der Hinterräder 12 und 14 sind Parallelen zu der Längsmittelebene gezogen. Der Winkel zwischen diesen Parallelen und der Radmittelebene 44 der Hinterräder 12 und 14 bildet jeweils den Vorspurwinkel α₁ des linken Hinterrads 12 und den Vorspurwinkel α₂ des rechten Hinterrads 14. Die Darstellung der Längsmittelebene 34 gemäß Figur 3 entspricht der Definition gemäß DIN 70 000.

Figur 3 zeigt ein Beispiel, das nicht Gegenstand der Erfindung ist.

Die Targets 26 bis 32 sind jeweils mit einer in Figur 3 beispielhaft zentriert dargestellten signifikanten Marke versehen, die einen bekannten Abstand g zur Radmittelebene 44 aufweist. Die signifikante Marke mit bekanntem Abstand g zur Radmittelebene 44 und die ermittelte Drehachse 42 erlauben die Bestimmung der Koordinaten des Drehzentrums 40 für jedes Rad 8 bis 14.

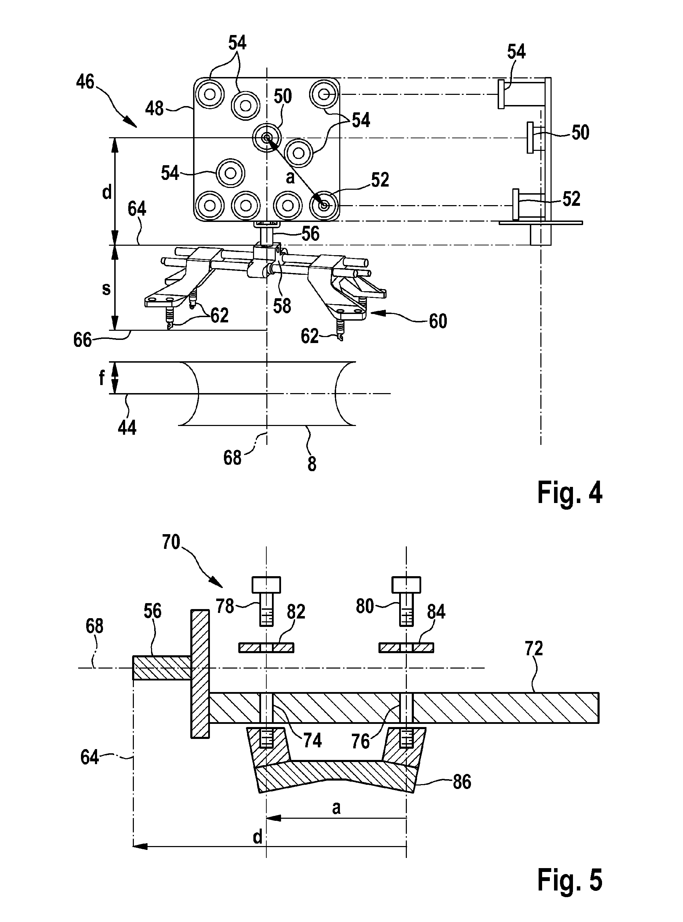

Figur 4 zeigt eine schematische Perspektivansicht einer ersten Targetanordnung 46 zur Anbringung an einer schematisch darunter gezeigten Felge eines Rads 8 sowie eine schematische Seitenansicht des Targets 48 der Targetanordnung 46.

Die Targetanordnung 46 umfasst ein in Figur 4 exemplarisch quadratisch ausgeführtes Target 48, das mit einem Bolzen 56 in einer Aufnahme 58 einer Targethalterung 60 befestigt ist. Die Targethalterung 60 umfasst drei Schienen oder Stangen, auf denen zwei Spannelemente verschieblich angeordnet sind, an denen nach unten weisende Aufnahmebolzen 62 ansetzen, mit denen die Targethalterung 60 an der darunter angedeuteten Radfelge 8 befestigt und insbesondere auf deren Felgenhorn festgespannt werden kann. Die Targethalterung 60 weist ferner an der Aufnahme 58 einen Anschlag für den Bolzen 56 des Targets 48 auf, der die Bezugsebene 64 bildet.

Der Anschlag für die Bezugsebene 64 hat bei allen Targethalterungen 60 einen gleichen Abstand s, gemessen zu einer Auflageebene 66 an den Aufnahmebolzen 62, mit denen die Targethalterungen 60 am Felgenhorn der Radfelge 8 anliegen.

Des Weiteren ist eine Entfernung f zwischen der Auflagefläche 66 für die Aufnahmebolzen 62 am Felgenhorn und einer Radmittelebene 44 bekannt. Die Entfernung f ist fahrzeugspezifisch.

Auf der Vorderseite des Targets 48 ist eine erste signifikante Marke 50 in etwa mittig angeordnet. Das erste signifikante Merkmal 50 hat einen kalibrierten Abstand d, gemessen entlang der Steckachse 68, zu der Bezugsebene 64. Dieser Abstand d wird insbesondere zwischen dem Merkmalszentrum der ersten signifikanten Marke 50 und der Bezugsebene 64 gemessen.

Die Abstände d, s und f und/oder der sich daraus ergebende Gesamtabstand g=d+s+f der ersten signifikanten Marke 50 von der Radmittelebene 44 sind der Auswerteeinheit 24 bekannt.

Die Kenntnis des Abstands g ist erforderlich, um bei einem später beschriebenen Messvorgang die Fahrzeuglängsmittelebene 34 für das zu vermessende Fahrzeug im Messplatzbezugsystem zu ermitteln.

Des Weiteren ist eine zweite signifikante Marke 52 in dem rechten unteren Bereich auf der Vorderseite des Targets 48 vorgesehen. Das zweite signifikante Merkmal 52 hat einen kalibrierten Abstand a zu dem ersten signifikanten Merkmal 50, wobei dieser Abstand a jeweils zwischen den Merkmalszentren der Marken 50 und 52 gemessen ist. Dieser Abstand a ist der Auswerteeinheit 24 ebenfalls bekannt.

Die übrigen in Figur 4 exemplarisch auf der Vorderseite des Targets 48 verteilten Marken 54 sind unbestimmt, d. h., weder ihre Position, noch ihr gegenseitiger Abstand sind der Auswerteeinheit 24 bekannt.

Die Marken 50, 52 und 54 beinhalten jeweils ein kreisförmiges zentriertes Merkmal, das vorzugsweise in dunkler, bspw. schwarzer Farbe ausgeführt ist, einen das zentrierte Merkmal umgebenen Kreisring, der insbesondere in heller, bspw. reflektierender Farbe ausgeführt ist, und einen diesen Kreisring umgebenden schmaleren äußeren Kreisring, der insbesondere in einer dunklen Farbe, bspw. in der gleichen Farbe wie das zentrierte Merkmal, ausgeführt ist. Derartige Marken, insbesondere deren kreisförmiges zentriertes Merkmal vor dem hellen Hintergrund des dieses umgebenden Kreisrings, können besonders gut optisch erfasst werden.

In der Seitenansicht des Targets 48 ist gut zu erkennen, dass die Targetplatte gegenüber der Steckachse 68 etwas nach hinten (in Figur 4 also nach rechts) versetzt ist, und dass die Marken 50, 52 und 54 jeweils als Säulenabschnitte mit Markenscheiben an deren Vorderseite ausgebildet sind. Während die Säulenabschnitte der unbestimmten Marken 54 am längsten ausgebildet sind, sodass die Markenscheiben der unbestimmten Marken 54 am weitesten von der Targetplatte nach vorne stehen, ist der Säulenabschnitt der zweiten signifikanten Marke 52 etwas kürzer und der Säulenabschnitt der ersten signifikanten Marke 50 noch ein weiteres Stück kürzer ausgebildet, sodass die zweite signifikante Marke 52 in einer Ebene hinter den unbestimmten Marken 54 und die erste signifikante Marke 50 in einer weiteren Ebene, die gegenüber den Ebenen der unbestimmten Marken 54 und der zweiten signifikanten Marke 52 zurückgesetzt ist, liegt. Bei der Seitenansicht gemäß Figur 5 sind zur Vereinfachung der Darstellung nur drei der auf der Vorderseite des Targets 48 vorhandenen Marken dargestellt.

In einer alternativen, hier nicht gezeigten Ausführungsform können die unbestimmten Marken 54 auch jeweils in zwei oder mehr unterschiedlichen Ebenen liegen.

Figur 5 zeigt eine schematische Schnittansicht einer Targetanordnung 70 wobei die Targethalterung der Targetanordnung 70 weggelassen ist.

Die Targetscheibe 72 ist gegenüber dem Bolzen 56 und der Steckachse 78 etwas nach hinten (in Figur 5 also nach unten) versetzt, und sie ist mit zwei Passbohrungen 74 und 76 versehen, wobei die erste Passbohrung 74 in einem unteren Bereich (in Figur 5 also links), und die zweite Passbohrung 76 in einem mittleren Bereich der Targetplatte 72 ausgeführt sind. In die Passbohrungen 74 und 76 werden von vorne jeweils Passstifte 78 und 80 derart eingesetzt, dass mit ihren verbreiterten Köpfen die Passscheiben 82 und 84 auf die Vorderseite der Targetplatte 72 gepresst und dort positionsgenau fixiert und zentriert werden und dass ihre mit einem Gewinde versehenen Vorderseiten hinten aus der Targetplatte 72 herausstehen, sodass ein Haltegriff 86 an der Rückseite der Targetplatte 72 befestigt werden kann.

Die Passscheiben 84 und 82 definieren die beiden signifikanten, optisch messbaren Marken, deren Mittelpunkt markiert jeweils den Messpunkt.

Der Abstand d der ersten signifikanten Marke zu der Bezugsebene 64 sowie der Abstand a zwischen den beiden signifikanten Marken, die beide der Auswerteeinheit 24 bekannt sind, sind in Figur 5 ebenfalls eingezeichnet.

Bei dem Target 70 liegen die Passscheiben 82 und 84 in einer Ebene, die hinter (also in Fig. unterhalb) der Steckachse 68 verläuft.

Bei diesem Ausführungsbeispiel ist der Abstand der beiden signifikanten Marken mit ausreichender Genauigkeit aus der Konstruktion und dem Fertigungsprozess des Targets 70 und der darunter angeordneten, in Figur 5 nicht gezeigten Targethalterung, vordefiniert. Dadurch kann vorteilhafterweise die Kalibrierung des Abstands entfallen und die Handhabung vereinfacht werden, zumal die Abstände der durch die Passstifte und Passscheiben gebildeten Marken bei allen Targetanordnungen und Targets identisch sind. Die Targets sind dabei beliebig untereinander austauschbar.

Alternativ zum Vorsehen eines Haltegriffs 86 können die Passstifte 78 und 80 auf der Rückseite der Targetplatte 72 auch einfach mit Muttern gekontert und befestigt werden.

Bei der Schnittansicht des Targets 70 gemäß Figur 5 sind zur Vereinfachung der Darstellung nur zwei signifikante Merkmale gezeigt. Weitere unbestimmte Marken können in beliebiger Weise auf der Vorderseite der Targetplatte 72 angebracht bspw. aufgeklebt werden.

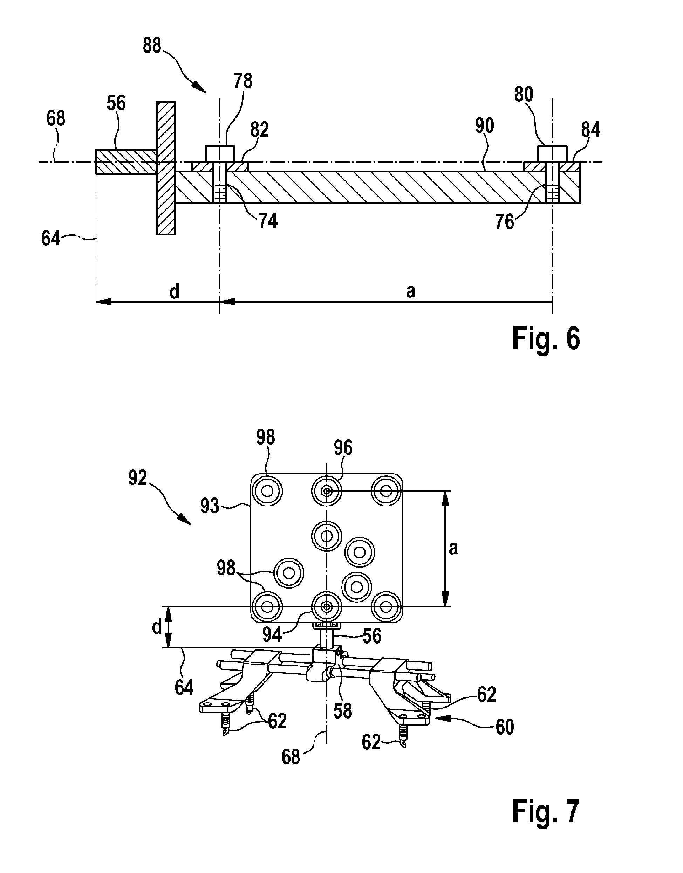

Figur 6 zeigt eine schematische Schnittansicht einer Targetanordnung 88, die hinsichtlich ihres Aufbaus weitgehend der ersten Targetanordung 70 entspricht, , wobei die Targethalterung weggelassen ist.

Bei der Targetanordnung 88 ist kein Haltegriff auf der Rückseite der Targetplatte 90 vorgesehen, die Passstifte 78 und 80 greifen mit ihren Gewinden jeweils in entsprechende Gewinde der Passbohrungen 74 und 76 ein und fixieren so sich selbst und die Passscheiben 82 und 84. Die durch den Passstift 78 und die Passscheibe 82 gebildete erste signifikante Marke ist in einem unteren Bereich (in Figur 6 links dargestellt) und die durch den Passstift 80 und die Passscheibe 84 gebildete zweite signifikante Marke ist in einem oberen Bereich der Targetplatte 90 (in Figur 6 also rechts) ausgeführt. Dementsprechend ist der Abstand d zwischen der ersten signifikanten Marke und der Bezugsebene minimal, und mögliche Deformationen des Targets 88 wirken sich nur minimal auf die Position der ersten signifikanten Marke zur Steckachse oder Drehachse 68 aus. Ebenso ist der Abstand a zwischen den beiden signifikanten Marken so groß wie möglich, dadurch wirkt sich die Toleranz des Sollabstands mit geringerem Einfluss auf die Messergebnisse aus, da der verbleibende Fehler umgekehrt proportional zur Länge des Sollabstands ist.

Bei dem Target 88 liegen die Passscheiben 82 und 84 in der Ebene, die durch die Steckachse 68 verläuft.

Figur 7 zeigt eine schematische Perspektivansicht einer Targetanordnung 92.

Diese Targetanordnung 92 entspricht weitgehend der Targetanordnung 46 aus Figur 4, wobei im Unterschied hierzu beide signifikanten Marken 94 und 96 auf der Steckachse 68 liegen und wobei die erste signifikante Marke 94 in einem unteren Bereich des Targets 93 und die zweite signifikante Marke 96 in einem oberen Bereich des Targets 93 liegen.

Um den Temperatureinfluss zu minimieren, können die erfindungsgemäßen Targetanordnungen aus einem Material mit geringem Temperaturausdehnungskoeffizienten hergestellt werden, bspw. aus Kohlefaser.

Wird durch die Fertigung der Targetanordnungen sichergestellt, dass alle Targets sowohl einen identischen Abstand d zwischen der ersten signifikanten Marke und der Bezugsebene also auch einen identischen Abstand a zwischen den beiden signifikanten Marken haben, so ist dies für die Bestimmung der Fahrzeuglängsmittelebene ausreichend, eine exakte Kenntnis dieser Abstände kann entfallen. Dabei kann der Abstand d in der Auswerteeinheit einmal hinterlegt und für alle Targets als gleich angenommen werden. Weicht der tat-sächliche Abstand infolge konstruktiver Änderungen des Targets vom hinterlegten Abstand ab, werden die Drehzentren nicht in der physikalischen Radmittelebene liegen. Aufgrund der symmetrischen Anordnung der vier Räder ist die Auswirkung auf die Bestimmung der Längsmittelebene minimal, solange die Abstände d bei allen Targets um den gleichen Wert vom hinterlegten Wert abweichen. Daher muss die auf der Auswerteeinheit laufende Auswertesoftware nicht verändert werden.

Dies gilt analog für den Abstand a zwischen den beiden signifikanten Targets. Weicht der tatsächliche Abstand infolge konstruktiver Änderungen des Targets vom hinterlegten Abstand ab, so werden die Messergebnisse für alle Räder um den gleichen Faktor verfälscht. Dies hat keinen Einfluss auf die Winkelberechnung und somit auf die Berechnung der Fahrzeuglängsmittelebene. Lediglich die hier weniger relevanten metrischen Messgrößen wie Spurweite und Radstand sind so nicht genau bestimmbar.

In ähnlicher Art und Weise werden Temperatureinflüsse ausgeglichen, solange alle Radadapter denselben Temperaturveränderungen ausgesetzt sind.

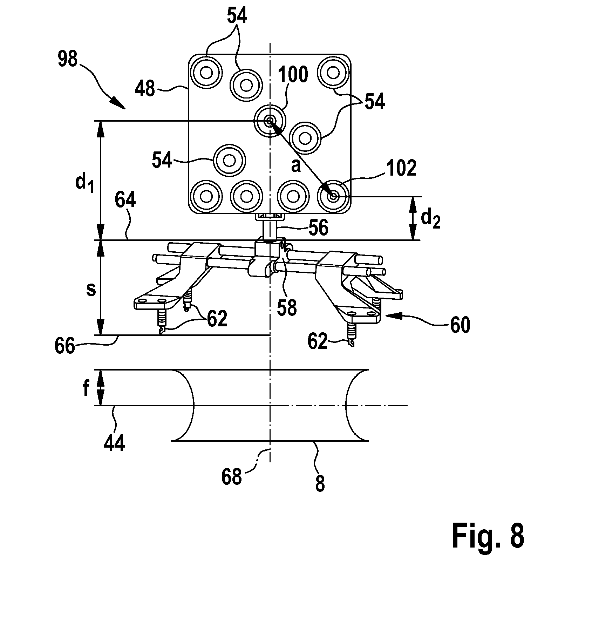

Figur 8 zeigt eine schematische Perspektivansicht einer Targetanordnung 98.

Diese Targetanordnung 98 entspricht weitgehend der Targetanordnung 46 aus Figur 4, wobei die signifikanten Marken 100 und 102 nicht, wie dies in Figur 4 der Fall ist, verglichen mit den unbestimmten Marken 54, weiter hinten liegen müssen, sondern mit diesen in einer Ebene liegen können.

Bei dem Target 48 der Targetanordnung 98 ist der Abstand d1 der ersten signifikanten Marke 100 zur Bezugsebene 64 bekannt, und ebenso ist der Abstand d2 der zweiten signifikanten Marke 102 zur Bezugsebene 64 bekannt. Demnach ist der Auswerteeinheit 24 auch der sich für die erste signifikante Marke ergebende Gesamtabstand g = d1 + s + f von der Radmittelebene 44 bekannt. Ebenso ist der Auswerteeinheit 24 der Gesamtabstand g = d2 + s + f der zweiten signifikanten Marke 102 von der Radmittelebene 44 bekannt. Die Kenntnis dieses Gesamtabstandes g ist erforderlich, um bei einem vorher beschriebenen Messvorgang die Fahrzeuglängsmittelebene 34 für das zu vermessende Fahrzeug im Messplatzbezugsystem zu ermitteln.

Wie in Figur 4, so sind auch in Figur 8 die exemplarisch auf der Vorderseite des Targets 48 verteilten Marken 54 unbestimmt, d. h. weder ihre Position, noch ihr gegenseitiger Abstand sind der Auswerteeinheit 24 bekannt. Die Ausführung der Marken 50, 52 und 54 entspricht der mit Bezug auf Figur 4 beschriebenen Ausführung, dies wird hier nicht noch einmal wiederholt.

Der Abstand a zwischen der ersten signifikanten Marke 100 und der zweiten signifikanten Marke 102 ist in Figur 8 mit einem Pfeil, der das Bezugszeichen a trägt, visualisiert.

In einer ersten Ausführungsform der Targetanordnung 98 ist dieser Abstand a der Auswerteeinheit 24 bekannt.

Dadurch, dass auf den bei der Fahrwerksvermessung an den Rädern des Kraftfahrzeugs zum Einsatz kommenden Targetanordnungen 98 die Gesamtabstände g der beiden signifikanten Marken 100 und 102 zu der Radmittelebene 44 und der Abstand der beiden signifikanten Marken 100 und 102 zueinander bekannt sind, lässt sich durch den Einmessvorgang das lokale 3D-Koordinatensystem der Marken der Targets besonders zuverlässig bestimmen, und die anschließende Fahrwerksvermessung liefert sehr präzise Messwerte.

Durch die der Auswerteeinheit 24 bekannten Gesamtabstände g der beiden signifikanten Marken 100 und 102 von der Radmittelebene 44 und durch den bei den Targetanordnungen 98 an den Rädern des Kraftfahrzeugs oder zumindest an derselben Achse des Kraftfahrzeugs übereinstimmenden Abstand a zwischen den beiden signifikanten Marken 100 und 102 lässt sich das lokale 3D-Koordinatensystem der Marken der Targets in dem Einmessvorgang ebenfalls sehr zuverlässig bestimmen, und die anschließende Fahrwerksvermessung liefert sehr genaue Messwerte.

## Patentansprüche

1. Verfahren zur optischen Fahrwerksvermessung mit einem Satz von wenigstens zwei Targetanordnungen (46, 98), die an Rädern (8, 10, 12, 14) eines Fahrzeugs angebracht sind und von einer Messkamera aufgenommen werden, wobei die Targetanordnung aufweist:
je ein Target (48);
je eine Targethalterung (60) mit einer Targetaufnahme (58), an der das Target (48) angebracht ist, wobei die Targethalterung (60) derart an ein Rad (8-14) eines Kraftfahrzeugs (7) angebracht ist, dass das Target (48) in einem Winkel zur Radmittelebene (44) ausgerichtet ist;
wobei auf dem Target (48) eine erste signifikante Marke (50) angeordnet ist, deren Abstand zu einer Bezugsebene (64) einer Auswerteeinhei bekannt ist, eine zweite signifikante Marke (52) angeordnet ist, deren Abstand zu der ersten signifikante Marke (50) oder zur Bezugsebene (64) der Auswerteeinheit bekannt ist, und wenigstens eine weitere unbestimmte Marke (54) angeordnet ist, wobei weder die Position der wenigstens einen unbestimmten Marke (54) noch der gegenseitige Abstand zwischen unbestimmten Marken der Auswerteeinheit bekannt ist; wobei
bei einem Einmessvorgang eine Bildfolge der signifikanten Marken und der mindestens einen unbestimmten Marke durch die Messkamera aufgenommen wird, wobei durch eine Auswerteeinheit ein lokales 3D-Koordinatensystem bestimmt wird, und wobei beim sich an den Einmessvorgang anschließenden Messvorgang eine Aufnahme von mindestens drei Marken getätigt wird, wobei die Lage der aufgenommenen mindestens drei Marken die Raumlage der jeweiligen Radachse im bekannten 3D-Koordinatensystem angibt, so dass sich daraus Spur und Sturz des Rades ermitteln lässt.

2. Verfahren zur optischen Fahrwerksvermessung nach Anspruch 1, wobei die erste und die zweite signifikante Marke (78, 82; 80, 84; 94, 96) jeweils an gegenüberliegenden Randbereichen auf der Vorderseite des Targets (90; 93) angeordnet sind.

3. Verfahren zur optischen Fahrwerksvermessung nach Anspruch 1 oder 2, wobei die erste signifikante Marke (50) und die zweite signifikante Marke (52) jeweils einen unterschiedlichen Abstand zur Vorderseite des Targets (48) aufweisen.

4. Verfahren zur optischen Fahrwerksvermessung nach einem der Ansprüche 1 bis 3, wobei die signifikante Marke oder signifikanten Marken (78, 82; 80, 84) jeweils einen anderen Abstand zur Vorderseite des Targets (48) als die wenigstens eine unbestimmte Marke aufweisen.

5. Verfahren zur optischen Fahrwerksvermessung nach einem der Ansprüche 1 bis 4, wobei die signifikante Marke oder signifikanten Marken und die wenigstens eine unbestimmte Marke jeweils den gleichen Abstand zur Vorderseite des Targets (48) aufweisen.

6. Verfahren zur optischen Fahrwerksvermessung nach einem der vorhergehenden Ansprüche, wobei die signifikante Marke oder signifikanten Marken (78, 82; 80, 84; 94, 96) auf der Steckachse (68) liegen.

7. Verfahren zur optischen Fahrwerksvermessung nach einem der vorhergehenden Ansprüche, wobei die Marken (50-54) als dunkle Kreisflächen ausgeführt sind, die von einem hellen Hintergrund umgeben sind und/oder wobei der helle Hintergrund insbesondere kreisringförmig und/oder reflektierend ausgebildet ist.

8. Verfahren zur optischen Fahrwerksvermessung nach einem der vorhergehenden Ansprüche, die signifikante Marke oder signifikanten Marken als in einer Passbohrung (74, 76) des Targets (72; 90) eingesetzter Passstift (78, 80) mit Passscheibe (82, 84) ausgeführt ist und/oder wobei an dem wenigstens einen auf der Rückseite des Targets (72) herausstehenden Passstift (78, 80) ein Haltegriff (86) angebracht ist.

9. Verfahren zur optischen Fahrwerksvermessung nach einem der vorhergehenden Ansprüche, wobei der Abstand der ersten signifikanten Marke zu einer Radmittelebene (44) der Auswerteeinheit bekannt ist, der sich zusammensetzt aus dem bekannten Abstand (d) der signifikanten Marke zu einer Bezugsebene (64), einem bekannten Abstand (s) von der Bezugsebene (64) zu einer Aufspannebene (66) und einem bekannten Abstand (f) von der Aufspannebene (66) zur Radmittelebene (44) durch eine Radfelge (8-14).

## Claims

1. Method for optical chassis measurement with the aid of a set of at least two target arrangements (46, 98) which are attached to wheels (8, 10, 12, 14) of a vehicle and are recorded by a measuring camera, the target arrangement having:
one target (48) each;
one target holder (60) each with a target receptacle (58) on which the target (48) is attached, the target holder (60) being attached to a wheel (8-14) of a motor vehicle (7) in such a way that the target (48) is aligned at an angle to the wheel centre plane (44);
in which there is arranged on the target (48) a first significant mark (50) whose distance from a reference plane (64) is known to an evaluation unit,
a second significant mark (52) is arranged, whose distance from the first significant mark (50) or from the reference plane (64) is known to the evaluation unit,
and at least one further unspecified mark (54) is arranged, neither the position of the at least one unspecified mark (54) nor the mutual spacing between unspecified marks being known to the evaluation unit;
in which during a calibration operation an image sequence of the significant marks and the at least one unspecified mark is recorded by the measurement camera,
a local 3D coordinate system being determined by an evaluation unit, and during the measurement process subsequent to the calibration operation at least three marks are recorded, the position of the recorded at least three marks specifying the spatial position of the respective wheel axle in the known 3D coordinate system so that it is possible therefrom to determine the track and camber of the wheel.

2. Method for optical chassis measurement according to Claim 1, in which the first and the second significant mark (78, 82; 80, 84; 94, 96) are respectively arranged at opposite edge regions on the front side of the target (90; 93).

3. Method for optical chassis measurement according to Claim 1 or 2, in which the first significant mark (50) and the second significant mark (52) are respectively at a different distance from the front side of the target (48).

4. Method for optical chassis measurement according to one of Claims 1 to 3, in which the significant mark or significant marks (78, 82; 80, 84) is/are respectively at a different distance from the front side of the target (48) than is the at least one unspecified mark.

5. Method for optical chassis measurement according to one of Claims 1 to 4, in which the significant mark or significant marks and the at least one unspecified mark are respectively at the same distance from the front side of the target (48).

6. Method for optical chassis measurement according to one of the preceding claims, in which the significant mark or significant marks (78, 82; 80, 84; 94, 96) lie(s) on the full-floating axle (68).

7. Method for optical chassis measurement according to one of the preceding claims, in which the marks (50-54) are designed as dark circular areas which are surrounded by a bright background, and/or in which the bright background is, in particular, annular and/or reflective.

8. Method for optical chassis measurement according to one of the preceding claims, in which the significant mark or significant marks is/are designed as an alignment pin (78, 80), inserted in an alignment bore (74, 76) of the target (72; 90), having a shim ring (82, 84) and/or in which a handle (86) is attached to the at least one alignment pin (78, 80) projecting from the rear side of the target (72).

9. Method for optical chassis measurement according to one of the preceding claims, in which the distance of the first significant mark from a wheel centre plane (44) is known to the evaluation unit, which distance is composed of the known distance (d) of the significant mark from a reference plane (64), a known distance (s) of the reference plane (64) from a clamping plane (66) and a known distance (f) from the clamping plane (66) to the wheel centre plane (44) through a wheel rim (8-14).

## Revendications

1. Procédé pour le mesurage optique d'un train de roulement avec un ensemble d'au moins deux systèmes cibles (46, 98) qui sont mis en place sur des roues (8, 10, 12, 14) d'un véhicule et qui font l'objet d'une prise de vue par une caméra de mesure, dans lequel le système cible présente :
respectivement une cible (48) ;
respectivement un support de cible (60) avec un logement de cible (58) au niveau duquel la cible (48) est mise en place, dans lequel le support de cible (60) est mis en place sur une roue (8-14) d'un véhicule automobile (7) de manière à ce que la cible (48) soit orientée selon un angle par rapport au plan médian de roue (44) ;
dans lequel un premier repère significatif (50) est disposé sur la cible (48), dont la distance par rapport à un plan de référence (64) est connue d'une unité d'évaluation,
un deuxième repère significatif (52) est disposé, dont la distance par rapport au premier repère significatif (50) ou par rapport au plan de référence (64) est connue de l'unité d'évaluation,
et au moins un autre repère indéterminé (54) est disposé, dans lequel l'unité d'évaluation ne connaît ni la position de l'au moins un repère indéterminé (54) ni la distance réciproque entre des repères indéterminés ;
dans lequel, lors d'un processus de mesurage, une séquence d'images des repères significatifs et de l'au moins un repère indéterminé fait l'objet d'une prise de vue par la caméra de mesure,
dans lequel on détermine, grâce à une unité d'évaluation, un système de coordonnées 3D local et dans lequel, lors du processus de mesure suivant le processus de mesurage, on diligente une prise de vue d'au moins trois repères, dans lequel la position des au moins trois repères ayant fait l'objet de la prise de vue indique la position dans l'espace de l'essieu de roue respectif dans le système de coordonnées 3D connu, de sorte qu'il est possible d'en déduire la trace et le carrossage de la roue.

2. Procédé pour le mesurage optique d'un train de roulement selon la revendication 1, dans lequel les premier et deuxième repères significatifs (78, 82 ; 80, 84 ; 94, 96) sont respectivement disposés au niveau de zones de bord situées en vis-à-vis sur la face avant de la cible (90 ; 93).

3. Procédé pour le mesurage optique d'un train de roulement selon la revendication 1 ou 2, dans lequel le premier repère significatif (50) et le deuxième repère significatif (52) présentent respectivement une distance différente par rapport à la face avant de la cible (48).

4. Procédé pour le mesurage optique d'un train de roulement selon l'une des revendications 1 à 3, dans lequel le repère significatif ou les repères significatifs (78, 82 ; 80, 84) présente (nt) respectivement une autre distance par rapport à la face avant de la cible (48) que l'au moins un repère indéterminé.

5. Procédé pour le mesurage optique d'un train de roulement selon l'une des revendications 1 à 4, dans lequel le repère significatif ou les repères significatifs et l'au moins un repère indéterminé présentent respectivement la même distance par rapport à la face avant de la cible (48).

6. Procédé pour le mesurage optique d'un train de roulement selon l'une des revendications précédentes, dans lequel le repère significatif ou les repères significatifs (78, 82 ; 80, 84 ; 94, 96) se situe(nt) sur l'arbre de roue (68).

7. Procédé pour le mesurage optique d'un train de roulement selon l'une des revendications précédentes, dans lequel les repères (50-54) sont réalisés en tant que surfaces circulaires sombres entourées par un arrière-plan clair et/ou dans lequel l'arrière-plan clair est en particulier réalisé en forme d'anneau de cercle et/ou de manière réfléchissante.

8. Procédé pour le mesurage optique d'un train de roulement selon l'une des revendications précédentes, dans lequel le repère significatif ou les repères significatifs est/sont réalisé(s) en tant que goujon d'assemblage (78, 80), avec une rondelle d'ajustage (82, 84), inséré dans un alésage d'ajustage (74, 76) de la cible (72 ; 90) et/ou dans lequel, sur l'au moins un goujon d'assemblage (78, 80) en saillie sur la face arrière de la cible (72), une poignée (86) est mise en place.

9. Procédé pour le mesurage optique d'un train de roulement selon l'une des revendications précédentes, dans lequel la distance du premier repère significatif par rapport à un plan médian de roue (44) est connue de l'unité d'évaluation, laquelle distance se compose de la distance (d) connue entre le repère significatif et un plan de référence (64), d'une distance (s) connue entre le plan de référence (64) et un plan de fixation (66) et d'une distance (f) connue entre le plan de fixation (66) et le plan médian de roue (44) à travers une jante de roue (8-14).
